# EUROPEAN PATENT SPECIFICATION

(11) **EP 0 339 630 B1**
(45) Date of publication and mention of the grant of the patent: **31.03.1993**
(21) Application number: 89107619.2
(22) Date of filing: 27.04.1989
(51) Int. Cl.: F16C 19/16

(54) **Rotary support device and method of producing same**
Drehbare Stützeinrichtung und deren Herstellungsverfahren
Dispositif de support rotatif et procédé de production de ce dispositif

(30) Priority: 28.04.1988 JP 107930/88
(43) Date of publication of application: 02.11.1989
(73) Proprietor: OSAKA TAIYU COMPANY, LTD., Minoo-shi Osaka (JP)
(72) Inventor: Okada, Minoru, Suita-shi Osaka (JP)
(74) Representative: TER MEER STEINMEISTER & PARTNER GbR

(56) References cited:
- CH-A- 496 182
- DE-A- 2 057 187
- DE-A- 2 156 081
- GB-A- 447 966
- US-A- 3 860 301
- US-A- 4 027 932
- US-A- 4 699 527

## Description

The present invention relates to a rotary support device for rotatably supporting an article carrying member like a pallet thereon, comprising an under ring having a horizontal base portion and a peripheral wall portion projecting upward from the inner periphery of the horizontal portion, a guide groove being formed in a periphery surface of the peripheral wall portion, and an upper ring having a horizontal bearing portion for supporting the article carrying member and a peripheral wall portion projecting downward from the horizontal bearing portion and having a guide groove in a peripheral surface thereof, a multiplicity of balls rollably interposed between the guide grooves of the under and upper rings, a retainer means being provided for holding a substantially constant spacing between adjacent balls, each of the rings having a side edge on the side of the grooved wall which is furthest from the horizontal portion of the respective ring, the side edge of the under ring covers the balls from the top, the side edge of the upper ring covers the balls from below, the upper and under rings being in engagement with each other inseparably and rotatably, with the balls provided therebetween.

The DE-A 2 156 081 discloses ball bearings of the above kind for axial and radial loads having an inner ring and an outer ring and a plurality of balls between the rings. The rings are made of plastic material. Grooves are provided in the inner ring and the outer ring for receiving the balls, the grooves having shoulders for holding the balls and thus holding the rings together.

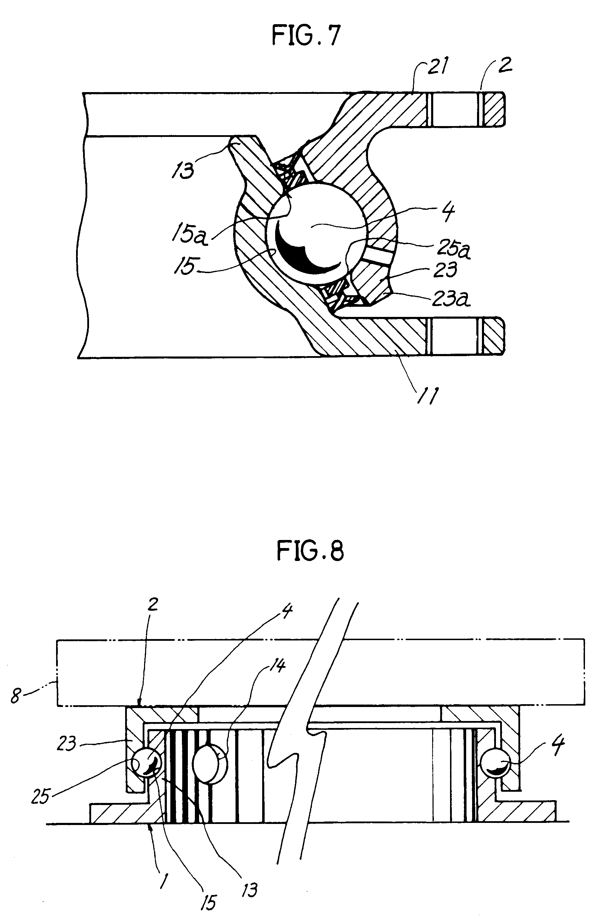

Fig. 8 of the present application shows a rotary support device which is conventionally used and in which balls 4 are arranged in a row between the peripheral wall 13 of an under ring 1 and the peripheral wall 23 of an upper ring 3.

When an article (not shown) is placed on a pallet 8 as placed on the device, the article can be lightly rotated along with the pallet, hence convenience.

However, the conventional rotary support device has the problem that it is low in durability against thrvst loads despite Its high durability against radial loads. This problem is attributable to the following construction. As will be apparent from Fig. 8, the peripheral walls 13, 23 of the under ring 1 and the upper ring 2 are approximately perpendicular to the plane of rotation of the support device, so that the area of contact of the balls 4 in guide grooves 15, 25 formed in the opposed surfaces of the walls 13, 23 with the grooved portions 15, 25 is much smaller in the thrust direction than in the radial direction.

Furthermore, the support device is assembled by fitting the upper ring 2 to the under ring 1, then placing the balls 4 into the space between the ring walls 13, 23 through a hole 14 formed in the inner ring, and thereafter closing the hole 14.

Further, the support device failed to provide between the rings with any retainer for holding balls.

An object of the present invention is to provide a rotary support device simplified in construction and in assembling procedure and rotatable with good stability, and a method of producing the device.

Another object of the invention is to provide a rotary support device having sufficient durability against thrust loads as well as against radial loads, and a method of producing the device.

To comply with these objects, the rotary support device according to the Invention is characterized in that the peripheral wall portion of the upper ring is projecting downward from the inner periphery of the horizontal portion thereof with an inward or outward inclination, the peripheral wall portion of the under ring projecting upward with an outward or inward inclination corresponding to the inclination of the upper ring, the wall portions being deformable away from each other thereby permitting the balls to be fitted into the guide grooves.

Terms like "vertical", "horizontal", "upper", "lower", etc. refer in the present context to the normal position of a rotary support device supporting a horizontal pallet or the like.

With the rotary support device of the invention, the under ring peripheral wall and the upper ring peripheral wall rollably supporting the balls are inclined with respect to the axis of rotation, and the balls are adapted to withstand both radial load and thrust load at the same time. The device therefore has sufficient durablity and is simple in construction.

Since the balls are rollable as fit-bed in the guide grooves of the under and upper rings, the two rings are free of misalignment, rendering the device useful for precision work.

The invention further provides a method of producing a rotary support device according to claim 4.

### BRIEF DESCRIPTION OF THE DRAWINGS

Fig. 1 is a perspective view partly broken away and showing a rotary support device embodying the invention;
Fig. 2 is a fragmentary view in section showing the embodiment;
Fig. 3 is a perspective view of a retainer;
Fig. 4 is a view for illustrating an assembling procedure;
Fig. 5 is a plan view showing the device being corrected;
Fig. 6 is a view in section taken along the line VI-VI in Fig. 5;
Fig. 7 is a fragmentary view in section showing another rotary support device embodying the invention; and
Fig. 8 is a fragmentary sectional view of a conventional device.

### DETAILED DESCRIPTION OF EMBODIMENTS

The present invention will be described below in greater detail with reference to the illustrated emboidments.

Although a method will be described below of producing large rotary support devices for use with an article handling pallet, small devices can of course be produced similarly, for example, for use in drawing pictures on clay jars or pots or in trimming or taking care of potted plants.

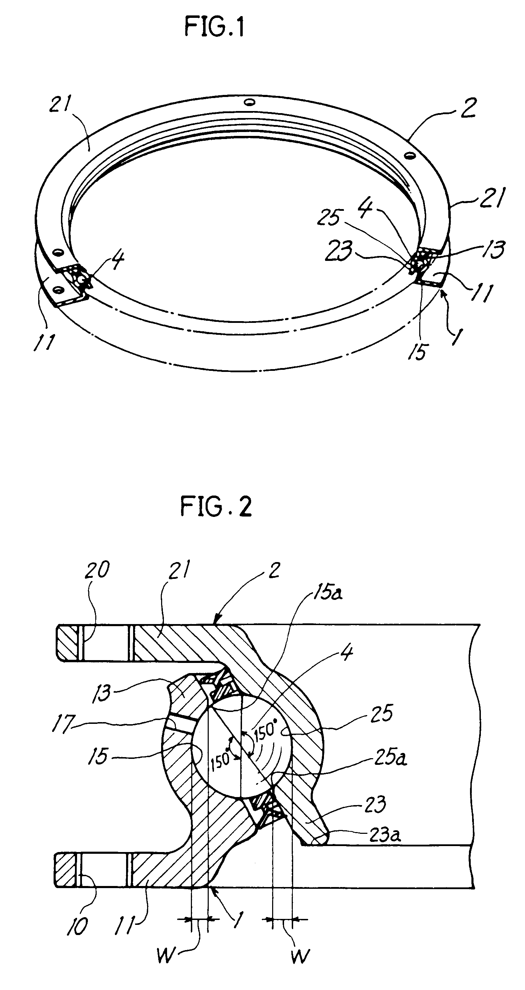

With reference to Figs. 2 to 4, each of an under ring 1 and an upper ring 2 is prepared from a shape steel member corresponding to the ring in cross section, by bending the member into a ring, about 2 m in diameter, using a bender, and welding opposite ends together.

The under ring 1 comprises a horizontal portion 11 and a peripheral wall 13 projecting upward by a short distance from the inner periphery of the horizontal portion 11 and inclined outward with respect to the vertical direction.

The upper ring 2 comprises a horizontal portion 21 and a peripheral wall 23 projecting downward by a short distance from the inner periphery of the horizontal portion 21 and inclined inward with respect to the vertical direction.

The wall 13 of the under ring 1 has a diameter increasing toward its upper end, while the wall 23 of the upper ring 2 has a diameter decreasing toward its lower end in corresponding relation to the under ring wall 13. The upper ring wall 23 is fitted in the under ring wall 13 with a clearance formed therebetween.

The ring walls 13, 23 are inclined at an angle of about 30 degrees with respect to the vertical direction, i.e., to the axis of rotation of the device.

Preferably, the peripheral wall 23 of the upper ring 2 has a vertical portion 23a, about 2 to 3 mm in length, at its lower end for preventing balls from falling off when the upper ring is pressed in as will be described later.

The horizontal portions 11, 21 of the rings 1, 2 are formed respectively with holes 10 for inserting bolts or the like therethrough to fix the device to the floor, and with holes 20 for inserting bolts or the like therethrough to fix a pallet or like work table to the top of the device.

Circumferential guide grooves 15, 25 are formed in the opposed faces of the peripheral walls 13, 23, respectively, approximately centally of their width. In cross section, the wall surfaces defining the guide grooves 15, 25 are in the form of a circular arc subtending an angle of 150 degrees at the center of the ball 4 to be described below in conformity with the surface of the ball 4.

A grease injection bore 17 is formed in the peripheral wall 13 of the under ring 1 and provided with a grease nipple (not shown).

Balls 4, 19 mm (3/4 inch) in diameter, are fitted in the guide grooves 15, 25 and arranged between the two rings at a pitch of about 30 mm.

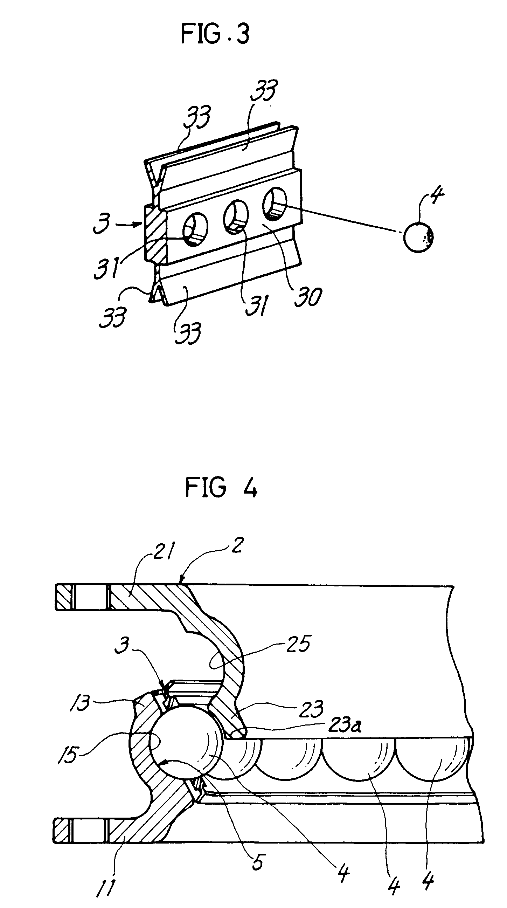

The balls 4 are spaced at the specified distance by synthetic resin retainers 3 shown in Fig. 3.

The retainer 3 comprises a strip 30 having five ball accommodating holes 31 arranged at equal spacings. The strip 30 has bifurcated lips 33, 33 formed at each side thereof and extending longitudinally thereof. The lips 33 are in contact with the respective ring walls 13, 23 to prevent ingress of dust or extraneous matter into the path of rolling of the balls 4.

A required number of retainers 3 are used as arranged along the guide grooves in accordance with the size of the rings.

The opposed surfaces of the rings 1, 2 defining the guide grooves 15, 25 partially cover the balls 4 from above and below, respectively, by an amount W which is about 4 mm. Accordingly, when the upper ring 2 is brought up, the balls 4 engage the outer side edges 15a, 25a of the respective grooved portions, thereby preventing the rings from separating from each other.

The peripheral walls 13, 23 of the rings 1, 2 rollably supporting the balls 4 are inclined and therefore permit the balls 4 to withstand both radial load and thrust load at the same time. This gives improved durability to the device although it is simple in construction.

Moreover, since the balls 4 are rollable as fitted in the guide grooves 15, 25 of the upper ring 2 and the under ring 1, these two rings are free of misalignment, rendering the device usable for precision work.

The embodiment shown in Fig. 2 can be of a construction corresponding to the device as turned upside down. Fig. 7 shows such an embodiment. With reference to Fig. 7, the peripheral wall 13 of an under ring 1 projects upward from the inner periphery of its horizontal portion 11 and is inclined inward with respect to the vertical direction, while the peripheral wall 23 of an upper ring 2 projects downward from the inner periphery of its horizontal portion 21 and is inclined outward with respect to the vertical direction.

Although the guide grooves 15 and 25 are formed in the inner surface of the wall 13 and the outer surface of the wall 23 according to the embodiment shown in Fig. 2, these grooves 15, 25 can conversely be formed in the outer surface of the wall 13 and the inner surface of the wall 23. The same is true of the embodiment of Fig. 7.

The above rotary support will be assembled by the following method and procedure.

With reference to Fig. 4, retainers 3 having balls 4 fitted therein are closely arranged along the guide groove 15 of the under ring 1, and the balls 4 are retained by holding means 5 so as not slip off the grooved portion 15.

With the present embodiment, the holding means 5 is grease. Utilizing the adhering property of the grease, the balls 4 are held in the guide groove 15 against slipping off. Alternatively, the holding means can be suitable mechanical support means for preventing the balls from falling off the guide grooved portion.

The lower outer portion of the wall 23 of the upper ring 2 is then placed over the balls 4 (Fig. 4).

When the upper ring 2 is pressed, the ring peripheral walls 13, 23 are deformed away from each other, permitting the balls 4 to fit also into the guide groove 25 of the upper ring 2 (Fig. 2). The vertical portion 23a formed on the upper ring wall 23 serves to prevent the balls 4 from falling off the grooved portion 15 at this time as best seen in Fig. 4.

Upon the balls 4 fitting into both the guide grooves 15, 25, the walls 13, 23 restore themselves to the original state. In this state, the outer side edges 15a, 25a of the grooved portions 15, 25 partially cover the balls 4 so as to retain the balls from falling off. The balls 4 thus engaged by the side edges 15a, 25a prevent the separation of the two rings.

Although the device can be completed by the foregoing steps, it is desirable to further execute the following step.

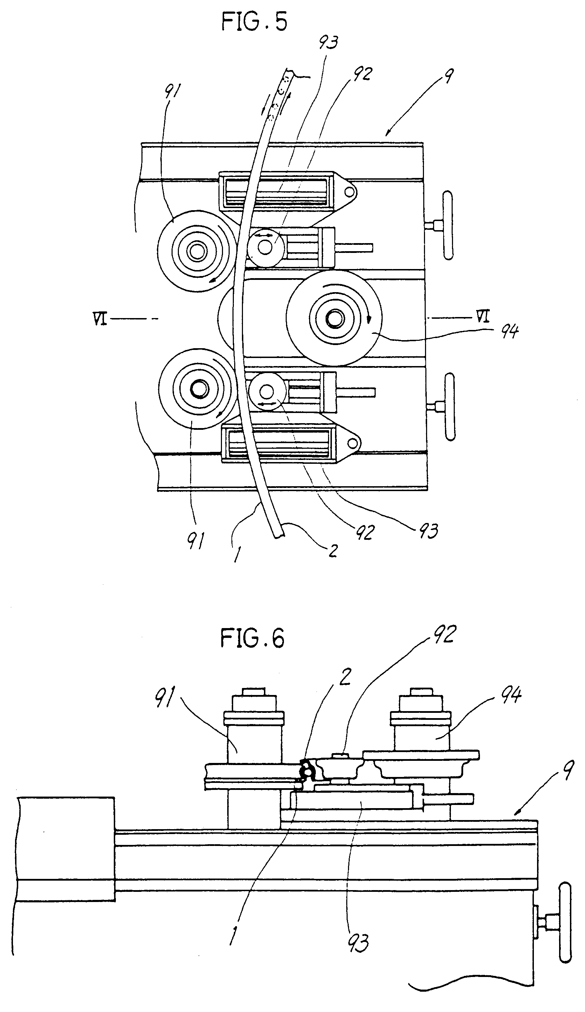

With reference to Fig. 5, a portion of the rotary support device is fitted in between two fixedly positioned rollers 91, 91 on a known bender 9 and correction rollers 92, 92 opposed to and movable toward or away from the respective rollers 91, 91 with the device placed on support rolls 93, 93 on opposite sides of the rollers 91, 91.

The portion of the device left unsupported by the bender 9 is supported by a plurality of stands (not shown) so that the device is rotatable in a horizontal plane.

A movable pressure roller 94 is moved toward a position between the fixed rollers 91, 91 to push the upper ring 2 with the roller 94, bringing the under ring 1 into contact with the fixed rollers 91, 91.

The two fixed rollers 91, 91 are driven in the same direction, while the pressure roller 94 is driven in a direction opposite to the direction of rotation of the rollers 91.

The rotation of these rollers rotates the upper ring 2 and the under ring 1 in directions opposite to each other. The correction rollers 92 are moved toward the fixed rollers 91 to press the wall 23 of the upper ring 2 outward.

Consequently, the upper ring wall 23 rotates while being subjected to a force acting to diametically enlarge the wall 23. This eliminates a clearance, if any, between the balls 4 and the grooved portions 25, 15 of the upper and under rings 2, 1. The above operation also breaks in the balls 4 and the grooved rings 1, 2, rendering the balls 4 smoothly rotatable along the guide grooves 15, 25 even if these grooves are not finished by cutting to make the upper ring 2 smoothly rotatable.

The breaking-in step may alternatively be so performed as to rotate the two rings relative to each other while pressing the peripheral wall of the outer ring inward.

In fabricating small rotary support devices, the under ring and the upper ring can be prepared by blanking with a press and bending the blanks.

Furthermore, the guide grooves 15, 25 may be formed in the under ring and upper ring by recessing the peripheral walls 13, 23 to the shape of a groove by press work, and cutting the grooved portions in conformity with the spherical surface of the ball 4 when required.

As already stated, balls 4 are arranged in the guide groove of one of the rings, and the two rings are arranged as opposed to each other, with the balls 4 interposed therebetween and prevented from slipping off the grooved portion. In this state, the two rings are pressed against each other.

This deforms the under ring wall 13 and the upper ring wall 23 away from each other, permitting the balls to fit also into the guide groove 25 of the other ring.

Upon the balls 4 fitting into both the guide grooves 15, 25, the peripheral walls 13, 23 restore themselves to the original state, with the result that the two rings 1, 2 are engaged with each other by the balls 4, which prevent separation of the two rings.

The ring walls 13, 23 rollably supporting the balls 4 are in the form of a cone or inverted cone, and the balls 4 withstand both radial load and thrust load at the same time. This construction makes the device simple in construction.

Since the balls 4 are rollable as fitted in the guide grooves 15, 25 of the under and upper rings 1, 2, the two rings can be held in alignment with each other. Accordingly, the support device is usable for precision work.

As stated above, the device can be assembly merely by pressing the upper ring 2 against the under ring 1 with the balls 4 arranged on the ring 1. The device can therefore be produced by a simplified process at a reduced cost.

This can not be realized by the conventional rotary support device of Fig. 8 which comprises the combination of upper and under rings having a substantially vertical wall, and balls.

## Claims

1. Rotary support device for rotatably supporting an article carrying member like a pallet thereon, comprising an under ring (1) having a horizontal base portion (11) and a peripheral wall portion (13) projecting upward from the inner periphery of the horizontal portion (11), a guide groove (15) being formed in a periphery surface of the peripheral wall portion (13), and an upper ring (2) having a horizontal bearing portion (21) for supporting the article carrying member and a peripheral wall portion (23) projecting downward from the horizontal bearing portion (21) and having a guide groove (25) in a peripheral surface thereof, a multiplicity of balls (4) rollably interposed between the guide grooves (15,25) of the under and upper rings (1,2), a retainer means (3) being provided for holding a substantially constant spacing between adjacent balls, each of the rings (1,2) having a side edge (15a,25a) on the side of the grooved wall (13,23) which is furthest from the horizontal portion of the respective ring (1,2), the side edge (15a) of the under ring (1) covers the balls (4) from the top, the side edge (25a) of the upper ring (2) covers the balls (4) from below, the upper and under rings (1,2) being in engagement with each other inseparably and rotatably, with the balls (4) provided therebetween, **characterized** in that the peripheral wall portion (23) of the upper ring (2) is projecting downward from the inner periphery of the horizontal portion (21) thereof with an inward or outward inclination, the peripheral wall portion (13) of the under ring (1) projecting upward with an outward or inward inclination corresponding to the inclination of the upper ring (2), the wall portions (13,23) being deformable away from each other thereby permitting the balls to be fitted into the guide grooves (13,25).

2. Rotary support device as claimed in claim 1, **characterized** in that the retainer means (3) further includes seal means (33) in engagement with the peripheral walls (13,23) and for preventing ingress of dust or extraneous matter into the path of rolling of the balls (4).

3. Rotary support device as defined in claim 1 or 2 wherein the upper ring (2) is formed at the free end of the peripheral wall (23) with a skirt portion (23a) extending substantially vertically therefrom for holding the balls in position during assembly of the device.

4. Method for producing a rotary support device as defined in claim 1 and comprising the steps of pressing the under ring (1) and the upper ring (2) against each other to elastically deform at least a portion of peripheral walls (13,23) of the under and upper rings (1,2) away from each other and thereby fit the balls (4) into the guide grooves (15,25) of the under and upper rings (1,2), the method being characterized by further comprising the step of rotating the rings (1,2) relative to each other while pressing an inside peripheral wall outward or while pressing an outside peripheral wall inward to thereby break in the balls and the guide grooves (15,25) of the under and upper rings (1,2).

## Patentansprüche

1. Drehbare Stützeinrichtung zum drehbaren Abstützen eines einen Gegenstand tragenden Teils wie einer Platte, mit einem unteren Ring (1) mit einem waagerechten Basisbereich (11) und einem Umfangswandbereich (13), der aufwärts vom inneren Rand des waagerechten Bereichs (11) ausgeht, einer Führungsnut (15), die in einer Umfangsfläche des Umfangswandbereichs (13) ausgebildet ist, und einem oberen Ring (2), der einen waagerechten Tragbereich (21) zur Abstützung des den Gegenstand tragenden Teils und einen Umfangswandbereich (23) trägt, der nach unten von dem waagerechten Tragbereich (21) ausgeht und eine Führungsnut (25) in einer Umfangsfläche aufweist, einer Anzahl von Kugeln (8), die rollend zwischen den Führungsnuten (15,25) des unteren und des oberen Ringes (1,2) liegen, einer Käfigeinrichtung (3) zum Halten eines im wesentlichen konstanten Abstands zwischen den aufeinander folgenden Kugeln, wobei jeder der Ringe (1,2) eine Seitenkante (15a,25a) an der Seite der mit der Nut versehenen Wand (13,23) aufweist, die am weitesten von dem waagerechten Bereich des jeweiligen Ringes (1,2) entfernt ist, welche Seitenkante (15a) des unteren Ringes (1) die Kugeln (4) von der oberen Seite und welche Seitenkante (25a) des oberen Ringes die Kugeln (4) von unten abstützt, welche oberen und unteren Ringe (1,2) untrennbar und drehbar mit den zwischen beiden liegenden Kugeln (4) in Eingriff stehen, dadurch **gekennzeichnet,** daß der Umfangswandbereich (23) des oberen Ringes (2) vom inneren Umfangsrand des waagerechten Bereichs (21) nach unten mit nach innen oder außen gerichteter Neigung vorspringt, wobei der Umfangsrandbereich (13) des unteren Ringes (1) nach oben mit einer nach außen oder innen gerichteten Neigung entsprechend der Neigung des oberen Ringes vorspringt, welche Wandbereiche (13,23) voneinander fort verformbar sind und damit gestatten, daß die Kugeln in die Führungsnuten (15,25) eintreten können.

2. Drehbare Stutzeinrichtung nach Anspruch 1, dadurch **gekennzeichnet,** daß die Käfigeinrichtung (3) weiterhin eine Dichteinrichtung (33) in Eingriff mit den Umfangswänden (13,23) umfaßt, die ein Eintreten von Staub oder äußerer Materie in die Rollbahn der Kugeln (4) verhindert.

3. Drehbare Stutzeinrichtung nach Anspruch 1 oder 2, bei der der oberen Ring (2) am freien Ende der Umfangswand (23) mit einem Lippenbereich (23a) versehen ist, der sich im wesentlichen senkrecht von diesem aus erstreckt und die Kugeln wahrend der Montage der Vorrichtung in ihrer Position hält.

4. Verfahren zur Herstellung einer drehbaren Stützeinrichtung gemäß Anspruch 1, mit den Schritten des Pressens des unteren Ringes (1) und des oberen Ringes (2) gegeneinander zur elastischen Verformung wenigstens eines Bereichs der Umfangswände (13,23) des unteren und oberen Ringes (1,2) auseinander in bezug aufeinander und zum Einfügen der Kugeln (4) in die Führungsnuten (15,25) des unteren und oberen Ringes (1,2), **gekennzeichnet** durch den weiteren Schritt des Drehens der Ringe (1,2) in bezug aufeinander während des Pressens einer inneren umlaufenden Wand nach außen oder während des Pressens einer äußeren umlaufenden Wand nach innen und damit zum Eintreiben der Bälle in die Führungsnuten (15,25) des unteren und oberen Ringes (1,2).

## Revendications

1. Dispositif de support rotatif pour supporter de façon tournante un élément de transport d'articles, comme par exemple une palette, comprenant une bague inférieure (1) comportant une partie base horizontale (11) et une partie paroi périphérique (13) s'étendant vers le haut depuis la périphérie intérieure de la partie horizontale (11), une gorge de guidage (15) étant formée dans la surface périphérique de la partie paroi périphérique (13) et une bague supérieure (2) comportant une partie d'appui horizontale (21) pour supporter l'élément de transport d'articles et une partie paroi périphérique (23) s'étendant vers le bas depuis la partie d'appui horizontale (21) et comportant une gorge de guidage (25) dans sa surface périphérique, une multiplicité de billes (4) interposées de façon roulante entre la gorge de guidage (15, 25) des bagues inférieure et supérieure (1, 2), un moyen de retenue (3) étant présent pour maintenir un espacement sensiblement constant entre les billes adjacentes, chacune des bagues (1, 2) comportant un bord latéral (15a, 25a) sur le côté de la paroi (13, 23) pourvue d'une gorge qui se trouve la plus loin de la partie horizontale de la bague correspondante (1, 2), le bord latéral (15a) de la bague inférieure (1) recouvrant les billes (4) depuis le haut, le bord latéral (25a) de la bague supérieure (2) recouvrant les billes (4) depuis le dessous, les bagues supérieure et inférieure (1, 2) étant en contact l'une avec l'autre de façon inséparable et tournante, les billes (4) étant disposées entre ces bagues, caractérisé en ce que la partie paroi périphérique (23) de la bague supérieure (2) s'étend vers le bas depuis la périphérie intérieure de sa partie horizontale (21) avec une inclinaison vers l'intérieur ou vers l'extérieur, la partie paroi périphérique (13) de la bague inférieure (1) s'étendant vers le haut avec une inclinaison vers l'extérieur ou vers l'intérieur correspondant à l'inclinaison de la bague supérieure (2), les parties parois (13, 23) pouvant être déformées dans un sens les éloignant l'une de l'autre, ce qui permet de monter les billes dans les gorges de guidage (13, 25).

2. Dispositif de support rotatif selon la revendication 1, caractérisé en ce que le moyen de retenue (3) comprend, en outre, un moyen d'étanchéité (33) en contact avec les parois périphériques (13, 23) pour empêcher l'entrée des poussières ou de corps étrangers dans le chemin de roulement des billes (4).

3. Dispositif de support rotatif selon la revendication 1 ou 2, dans lequel la bague supérieure (2) comporte à l'extrémité libre de la paroi périphérique (23) une partie jupe (23a) s'étendant de façon sensiblement verticale depuis cette extrémité libre pour maintenir les billes en position pendant l'assemblage du dispositif.

4. Procédé pour fabriquer un dispositif de support rotatif tel que défini dans la revendication 1 et comprenant les étapes consistant à presser la bague inférieure (1) et la bague supérieure (2) l'une contre l'autre pour déformer élastiquement au moins une partie des parois périphériques (13, 23) des bagues inférieure et supérieure (1, 2) dans un sens qui les éloigne l'une de l'autre et à monter de cette manière les billes (4) dans les gorges de guidage (15, 25) des bagues inférieure et supérieure (1, 2), ce procédé étant caractérisé par le fait qu'il comprend, en outre, l'étape consistant à faire tourner les bagues (1, 2) l'une par rapport à l'autre tout en pressant la paroi périphérique intérieure vers l'extérieur ou tout en pressant la paroi périphérique extérieure vers l'intérieur pour roder de cette manière les billes et les gorges de guidage (15, 25) des bagues inférieure et supérieure (1, 2).
